# EUROPEAN PATENT APPLICATION

(11) **EP 4 531 126 A1**
(43) Date of publication of application: **02.04.2025**
(21) Application number: 23200848.2
(22) Date of filing: 29.09.2023
(51) Int. Cl.: H01M 4/04, H01M 10/04

(54) **METHOD OF ASSOCIATING MEASUREMENT DATA OF A MANUFACTURING PROCESS WITH AN ELECTRODE PROFILE**

(71) Applicant: CUSTOMCELLS Holding GmbH, 25524 Itzehoe (DE)
(72) Inventor: Diekman, Jan, 25524 Itzehoe (DE); Haar, Florian, 25524 Itzehoe (DE); Letzner, Marc, 25524 Itzehoe (DE)
(74) Representative: LKGLOBAL Lorenz & Kopf Patentanwalt Attorney at Law PartG mbB

(57) **Abstract**

The invention relates to a method of associating measurement data of a manufacturing process with an electrode profile. The manufacturing process comprises a plurality of manufacturing stages. The manufacturing process is configured for manufacturing a set of electrodes.

The method comprises for each electrode:
associating an electrode profile for providing characteristics of the electrode with a physical identifier for identifying the electrode,
providing the electrode with the physical identifier,
obtaining measurement data at at least one manufacturing stage, and
associating the measurement data with the electrode profile.

## Description

### FIELD OF THE DISCLOSURE

The present disclosure relates to a method of associating measurement data of a manufacturing process with an electrode profile.

### BACKGROUND

Batteries play a critical role in modern society, powering a wide range of devices from portable electronics to electric vehicles. Rechargeable batteries, also referred to as secondary batteries, are often preferred due to their reusability.

The increasing demand for portable electronics and electric vehicles has led to a growing need for batteries with higher energy density, longer lifespan (including number of possible charging cycles of a secondary battery), and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency and lifespan of batteries, including the battery electrodes (i. e. the anode or the cathode) used in the batteries. The quality of the elements used to assemble/manufacture a battery (e.g. its electrodes) can have a critical impact on the performance of the battery. Elements of a low quality can reduce the efficiency or lifespan of the battery. In the worst case, an insufficient quality can lead to a malfunctioning of the battery.

Various methods of making an electrode composition and lithium-ion batteries using the same are known, as e.g. disclosed in US20070269718A1.

In CN102125907A an on-line system is used for controlling coating of electrode plates of a lithium battery. The system comprises a first measuring device, a coating device, a drying device, a second measuring device and a procedure control device, wherein, the first measuring device, the coating device, the drying device and the second measuring device are sequentially connected together, and the first measuring device, the coating device and the second measuring device are respectively connected with the procedure control device; the first measuring device and the second measuring device respectively feed back the measured data about the loading capacity of a coating to the procedure control device; and the procedure control device calculates real-time loading capacity of the coating and compares the real-time loading capacity with preset loading capacity of the coating, and then issues an adjustment instruction to the coating device so as to adjust the slurry output quantity for coating.

### SUMMARY OF THE DISCLOSURE

Currently, it remains desirable to make cell the quality of manufactured battery cells more predictable und thus to more reliably produce battery cells which fulfill a predefined specification.

Therefore, the present disclosure relates to a method of associating measurement data of a manufacturing process with an electrode profile. The manufacturing process comprises a plurality of manufacturing stages. The manufacturing process is configured for manufacturing a set of electrodes. The method comprises for each electrode:
associating an electrode profile for providing characteristics of the electrode with a physical identifier for identifying the electrode,
providing the electrode with the physical identifier,
obtaining measurement data at at least one manufacturing stage, and
associating the measurement data with the electrode profile.

By providing such a method, it becomes possible to follow-up and/or monitor each single electrode across the manufacturing process. Accordingly, full traceability of each produced (i.e., manufactured) electrode can be achieved, including any electrodes already used in battery cells. Hence, it is possible to determine specific characteristics of produced electrodes, which have been influenced by potential deviations in the manufacturing process.

The method may therefore enable the assignment of e.g., in-line measurement values, such as area weight, coating thickness, geometries, defects, slurry charge, or process anomalies to a physical identifier of an electrode. Said physical identifier may for example be provided on a discrete area on a web-shaped electrode during the production process. In this way, during production of an electrode tape (forming the undivided set of electrodes), quality data may already be assigned to a later piece good (i.e., the separated electrode sheets). As a consequence, full traceability and consistent quality determination can be achieved.

As a further consequence, it becomes e.g., possible to classify the produced and separated electrode sheets according to certain characteristics (e.g., area weight, thickness, etc.) and also to sort out "not good" electrode sheets.

At the same time, the data obtained can be used to optimize the production process (e.g., for improving single manufacturing stages, and/or to increase the production yield).

Accordingly, the method may allow to generate a digital twin of an electrode tape which may comprise or consist of the (unseparated) set of electrodes. The data of the digital twin may be stored in a database and evaluated if necessary.

Conventional quality assurance measurements are often only carried out sample wise for roll goods, i.e., for an entire electrode tape but not for its single electrodes. In contrast, with the method of the present disclosure, it may be evaluated whether the single electrodes also meet predefined specifications and are thus "good" or qualified parts, even if the manufacturing process is still subject to normal process tolerances. Thus, it can be avoided that "not good" electrodes are used in predefined battery cell. In other words, a predefined, i.e., specified, battery cell may achieve its target parameters (according to its specification) more reliably.

The method of the present disclosure may be part of the manufacturing process (i.e., manufacturing method or system). However, the present disclosure may also relate to a standalone method, system or product which can be used in connection with a manufacturing process (i.e., manufacturing method or system).

The manufacturing process for manufacturing the set of electrodes may be part of a cell manufacturing process for manufacturing a battery cell (or other energy storage device).

Each electrode may have an own and individual physical identifier such that it can be distinguished from other electrodes.

The electrode profile may be a digital electrode profile, e.g., stored on a data storage device or in a database.

The manufacturing process may comprise at least one of the following manufacturing stages:
a mixing stage for preparing an electrode slurry,
a coating stage for coating and drying the electrode slurry on a current collector foil for obtaining an electrode tape,
a calendering stage for roll pressing the electrode tape,
a slitting stage for longitudinally cutting the electrode tape to a predefined size and preparing an electrode tab, and
an electrode separation stage for separating the electrode tape into the set of electrodes.

The electrode may be provided with a physical identifier during (or at) the coating stage, e.g., after the electrode has been coated and/or before the electrode is passed to the next stage.

Providing the electrode with the physical identifier at the coating stage has the following advantage: It can be difficult to assign a single electrode to a particular position in the electrode tape (e.g., via linear meters), since the lengths of the electrode tape, in particular the length of its coating may vary during manufacturing stages (e.g., may become longer in a calendaring stage). However, by providing the electrode with the physical identifier at the coating stage, any deformation or stretching of the electrode tape during further production stages will not affect the accurate positioning of the physical identifier at the respective electrode. In other words, the position of the physical identifier remains at the position of the respective electrode during the complete manufacturing process, independently from any deformations of the electrode tape. The physical identifier can thus always be accurately assigned to its electrode.

The electrode may be an electrode sheet, e.g., unseparated from other electrodes to form the electrode tape during the manufacturing process, or in a separated form after the manufacturing process.

Accordingly, during the manufacturing process (and before electrode separation), an electrode tape may comprise or consists of the unseparated electrodes (or electrode sheets). The electrode tape may also be referred to as an electrode foil. In other words, the set of electrodes may be unseparated to form an electrode foil or electrode tape.

Providing the electrode with a physical identifier may comprise applying the physical identifier on the electrode by a laser device, which is an example of an identifier device according to the present disclosure.

For example, the physical identifier may be applied (e.g., using inkjet/laser) during the coating stage (e.g., directly after coating) at e.g., an uncoated part of the electrode foil.

For example, the physical identifier may be or may comprise a DMC (data matrix code), which is e.g., lasered. Lasering may have the advantage that it is unforgeable and authenticatable. However, since lasering may weaken the electrode tape, the physical identifier may desirably be applied to an area of the electrode that is not used operatively in the cell.

In general, the term "physical identifier" may mean that this identifier is derivable (e.g., readable) from the (physical) electrode. In contrast, an electronic (i.e., digital) identifier which corresponds to or is assigned to the physical identifier may be used in the electrode profile or be part of the electrode profile.

Accordingly, the physical identifier may contain information which allows identifying the electronic identifier. Moreover, the physical identifier may optionally contain information about the electrode type.

The measurement data of the manufacturing process may comprise at least one of:
an electrode basis weight,
an electrode coating thickness,
an electrode density, and/or
an electrode defect.

Further examples of measurement data may comprise an offset between the electrodes, a coating offset, information about uncoated areas, coating geometries, and information about detected and/or identified defects of the electrode.

Moreover, an electrode density may be calculated based on the weight per unit area of the electrode and the electrode thickness.

The measurement data may further comprise product parameters of the electrode.

Obtaining measurement data at the at least one manufacturing stage may comprise:

identifying the electrode by scanning the physical identifier at the at least one manufacturing stage.

Accordingly, physical identifier may be provided before measurements are obtained (or at least simultaneously with obtaining the first measurement data, e.g., at the coating stage), such that the measurements can be assigned to the physical identifier.

For example, at each manufacturing stage a scanner may be used to scan the physical identifier and hence identify the respective electrode. Hence, each manufacturing stage may be equipped with a respective scanner.

Associating the measurement data to the electrode profile may comprise: associating the measurement data to the identified electrode.

The present disclosure further relates to a method of associating measurement data of a cell manufacturing process with a cell profile of a battery cell.

The battery cell may comprise a stack or plurality of electrodes. The method may comprise:
for each electrode performing the method of the present disclosure to obtain the measurement data,
associating the cell profile with a physical cell identifier for identifying the cell,
providing the cell with the physical cell identifier,
associating the electrode profiles of the electrodes with the cell profile.

The cell profile may serve for providing characteristics of the cell.

Accordingly, the physical cell identifier may be assigned to the cell profile which in return is associated with the electrode profiles of the electrodes contained in the cell. The electrode profiles may comprise measurement data of the respective electrodes. As a consequence, by reading the physical cell identifier the measurement data of the electrodes used in the cell may be obtained.

For each electrode a peripheral area comprising the physical identifier of the electrode may be removed.

The present disclosure further relates to an electrode for a battery cell, comprising:
a physical identifier configured to be associated with an electrode profile according to the present disclosure.

Instead of a battery cell also any other form of energy storage device may be used, e.g., a capacitor.

The physical identifier may be positioned in a peripheral area of the electrode.

The peripheral area may be adjacent to an electrode tab of the electrode.

The present disclosure further relates to a data storage device for storing at least one of:
measurement data of the manufacturing process associated with a physical identifier according to a method of the present disclosure,
an electrode profile according to a method of the present disclosure, and
a cell profile according to a method of the present disclosure.

The present disclosure further relates to a system for associating measurement data of a manufacturing process with an electrode profile. The manufacturing process comprises a plurality of manufacturing stages. The manufacturing process is configured for manufacturing a set of electrodes. The system comprises:
at least one measurement device configured to obtain measurement data of the electrode at at least one manufacturing stage, and
an identifier device configured to provide the electrode with a physical identifier, and a data storage device as described above.

The system may further comprise at least one manufacturing device for performing one or several manufacturing stages. Accordingly, the system may in addition be a manufacturing system configured for manufacturing a set of electrodes.

The technology provided by the present disclosure may be applied in various types of batteries such as lithium-ion secondary batteries. Other compatible examples of batteries may be sodium-ion batteries, potassium-ion batteries, magnesium-ion batteries, calcium-ion batteries or aluminum-ion batteries. The technology provided by the present disclosure may also be applied in various types of metal ion capacitors, such as lithium-ion capacitors.

The term battery and battery cell may be used interchangeably in the present disclosure.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 shows a flowchart of a method 100 of associating measurement data of a manufacturing process with an electrode profile according to examples of the present disclosure.
Figs. 2 shows a flowchart of a manufacturing process 200 according to examples of the present disclosure.
Fig. 3 schematically shows an example of the manufacturing process 200 of fig. 2.
Fig. 4 schematically shows an example of a set of electrodes.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

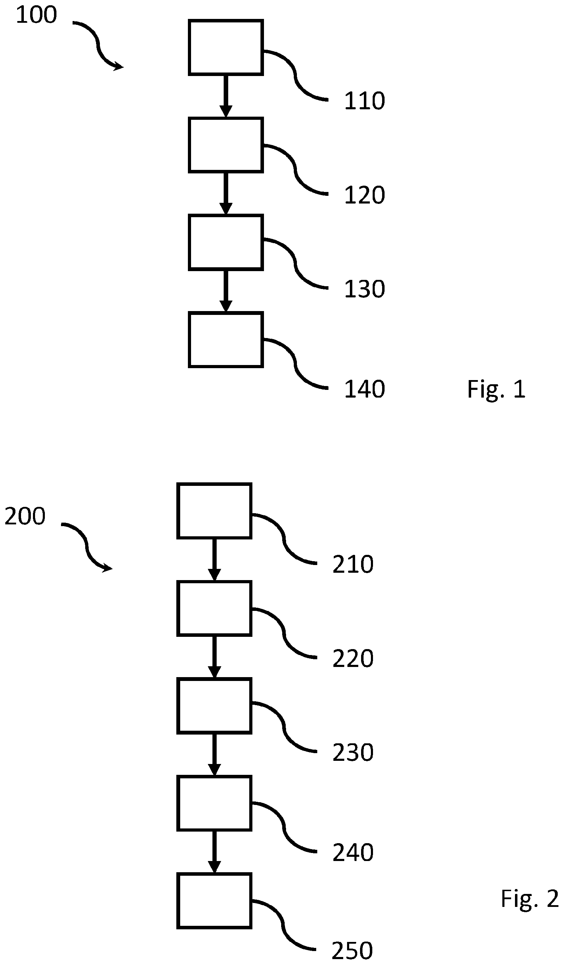

Fig. 1 shows a flowchart of a method 100 of associating measurement data of a manufacturing process with an electrode profile according to examples of the present disclosure. The manufacturing process may comprise a plurality of manufacturing stages and is configured for manufacturing a set of electrodes. An example of a manufacturing process 200 is described in context of fig. 2.

The method may comprise the following steps, which are applied to a set of electrodes, i.e., to each electrode (or electrode sheet) of the set. The set may be an electrode tape consisting of unseparated electrode sheets.

In a first step 110, an electrode profile is associated for providing characteristics of the electrode with a physical identifier for identifying the electrode. Associating the measurement data to the electrode profile may, for example, comprises associating the measurement data to the identified electrode.

In a second step 120, the electrode is provided with the physical identifier. Providing the electrode with a physical identifier may comprise applying the physical identifier on the electrode by a laser device.

In a third step 130, measurement data is obtained at at least one manufacturing stage.

Obtaining measurement data at the at least one manufacturing stage may comprise identifying the electrode by scanning the physical identifier at the at least one manufacturing stage.

In a fourth step 140, the measurement data is associated with the electrode profile.

Fig. 2 shows a flowchart of a manufacturing process 200 according to examples of the present disclosure. The manufacturing process 200 may comprise a set of manufacturing stages. In the manufacturing process (i.e., a method) a set of electrodes may be manufactured (i.e., produced). For example, the set of electrodes may be connected (i.e., not yet separated) electrode sheets forming an electrode tape. Said electrode tape may run through the different stages, such that each of its electrodes is processed in the different manufacturing stages. It is however possible that the electrode tape is wound up on a coil between at least some of the stages.

A first manufacturing stage 210 may be a mixing stage for preparing an electrode slurry.

A second manufacturing stage 220 may be a coating stage for coating and drying the electrode slurry on a current collector foil for obtaining an electrode tape. Each electrode may be provided with a physical identifier during the coating stage 220, e.g., directly after the electrode has been coated.

A third manufacturing stage 230 may be a calendering stage for roll pressing the electrode tape.

A fourth manufacturing stage 240 may be a slitting stage for longitudinally cutting the electrode tape to a predefined size and preparing an electrode tab.

A fifth manufacturing stage 250 may be an electrode separation stage for separating the electrode tape into the set of electrodes (i.e., single electrode sheets).

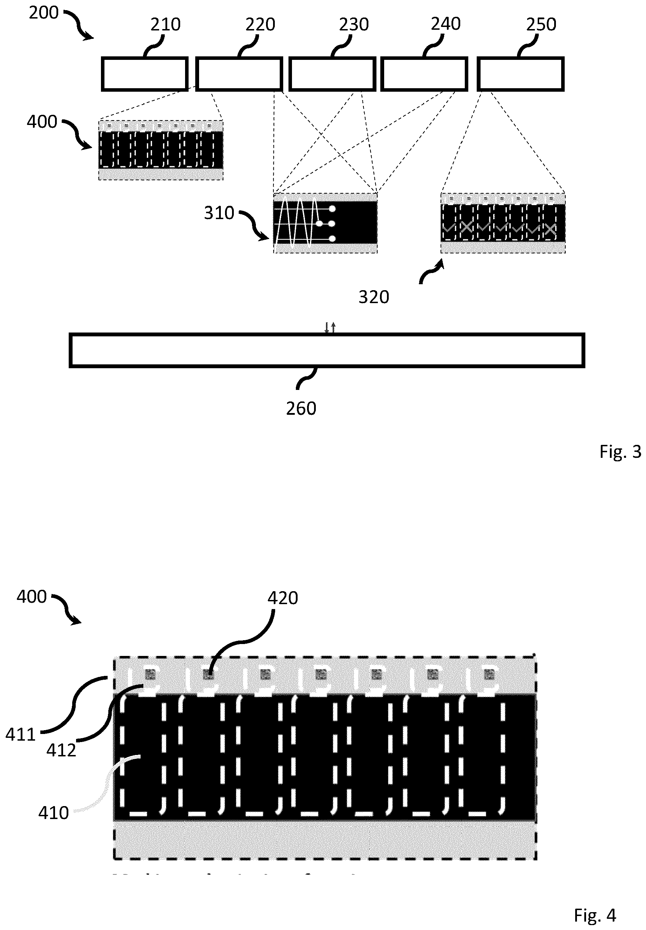

Fig. 3 schematically shows a further example of a manufacturing process 200, which may be a particular example of the manufacturing process 200 of fig. 2. The example of fig. 3 thereby combines the manufacturing process 200 of fig. 2 with the method of associating measurement data of fig. 1. Fig. 3 also schematically shows a system according to the present disclosure.

The manufacturing process 200 may comprise a mixing stage 210, a coating stage 220, a calendering stage 230, a slitting stage 240, and an electrode separation stage 250.

At each manufacturing stage a scanner (not shown in fig. 3) may be used to scan the physical identifier and thus identify the respective electrode. Hence, each manufacturing stage may be equipped with a respective scanner.

Furthermore, a data storage device 260 may be used during the manufacturing process 200 for storing data.

The data storage device 260 may store measurement data of the manufacturing process associated with a physical identifier, the data storage device 260 may e.g., comprise a respective database which contains the measurement data.

For example, the data storage device 260 may store measurement data for each electrode together with an electronic (i.e., digital) ID (i.e., identifier) of the respective electrode. The electronic ID may be a predefined value (e.g., a number) which may be associated to a DMC (data matrix code, which forms the physical identifier). Both the electronic ID and the physical identifier may be stored together in a library. Thus, it is merely necessary to scan the physical identifier and identify it in the library, in order to determine the associated electronic ID. The library may also be stored in the data storage device 260.

The data storage device 260 may hence store an electrode profile for each electrode. The electrode profile of an electrode may comprise the measurement data and the respective electronic ID.

Furthermore, the data storage device 260 may store a profile of a battery cell. The battery cell may comprise a stack or plurality of electrodes. Accordingly, the cell profile may comprise (or be associated with) the measurement data of the electrodes. In one example, the cell profile may store or associated with the electronic IDs of its electrodes. In this way, it becomes possible to obtain of each of its electrodes the respective measurement data from the data storage device.

The cell profile may be associated for providing characteristics of the cell with the physical cell identifier for identifying the cell, providing the cell with the physical cell identifier, associating the electrode profiles of the electrodes with the cell profile.

During the coating stage 220, a laser or inkjet may be used to provide each electrode of an electrode tape 400 with a physical identifier. In this regard it is also referred to fig. 4 which shows the electrode tape 400 in more detail. The physical identifier may relate to the subsequent coated electrodes shape. The physical identifier may be applied directly after the coating itself at the uncoated part of the electrode.

The physical identifier may be positioned in a peripheral area of the electrode.

During the coating stage 220, the calendering stage 230, and the slitting stage 240 (or at the end of each stage) measurement data 310 of the respective stage may be obtained.

In particular the measurement data may be obtained in a true-to-position measurement method. Accordingly, the measurement data can be reliably and unambiguously be assigned to their respective section of the electrode tape (i.e., the section where the measurement data have been taken and thus where the respective electrode is located).

Measurement data of the manufacturing process may comprise an electrode basis weight, an electrode coating thickness, an electrode density, and/or an electrode defect.

The measurement data may be sent to and stored in the data storage device 260.

Based on the measurement data of at least one stage, an electrode may be evaluated. For example, it may be determined on this basis whether the electrode fulfills predefined criteria (e.g., quality criteria or other predefined electrode specifications) or not. The electrode may thus be classified as "good" or "not good". Moreover, the electrodes may be classified according to different tolerance groups based on the measurement data.

As indicated by reference number 320, the "not good" electrodes which do not fulfill the predefined criteria may be removed. For example, the "not good" electrodes may be removed at the electrode separation stage 250, i.e., after separation of the electrodes.

Accordingly, the system of the present disclosure may obtain measurement data along the electrode manufacturing process chain and assigns the measurement data to a specific code (i.e., the physical identifier) on the electrode. This code always refers to a definite electrode sheet size. Thus, after separation, a collected data set can be directly assigned to an electrode sheet. The measurement data of an electrode may be classified for evaluation (e.g., good / not good). If the codes are read during the following stack assembly, each electrode sheet can be directly assigned to a cell at the end. This supports material and process data tracking.

Fig. 4 shows an example of a set of electrodes, i.e., of an electrode tape 400.

The electrode sheet 400 comprises a plurality of electrodes 410. Each electrode comprises a physical identifier 420 at a peripheral area 411 of the electrode tape.

The peripheral area may be adjacent to an electrode tab 412 of the electrode 410.

The peripheral area may be an area that is not used operatively in the cell, which e.g., is not coated with an active material in the coating stage.

The peripheral area comprising the physical identifier of the electrode may be removed as a last step of the manufacturing process and before qualified electrodes are assembled in a battery cell. Accordingly, since the physical identifier is kept until it is determined which electrodes are used in a battery cell, the physical identifiers and thus the electronic IDs of the used electrodes may be assigned to the cell profile. In other words, even if the physical identifiers may not be present anymore in the cell, the measurement data of the electrodes used in the cell can still be unambiguously identified in the data storage device.

For example, the battery cell may be provided with a physical cell identifier, e.g., by laser or inkjet or in form of an electronic code, an electronic code stored in a data storage of the cell, etc.. The physical cell identifier in return may be associated with the cell profile. Accordingly, by reading the physical cell identifier the measurement data of the electrodes used in the cell may be obtained.

It may also be possible that the measurement data of the used electrodes are locally stored in the battery cell.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

## Claims

1. A method of associating measurement data of a manufacturing process with an electrode profile, wherein the manufacturing process comprises a plurality of manufacturing stages and is configured for manufacturing a set of electrodes,
the method comprising for each electrode:
associating an electrode profile for providing characteristics of the electrode with a physical identifier for identifying the electrode,
providing the electrode with the physical identifier,
obtaining measurement data at at least one manufacturing stage, and
associating the measurement data with the electrode profile.

2. The method of claim 1, wherein the manufacturing process comprises at least one of the following manufacturing stages:
a mixing stage for preparing an electrode slurry,
a coating stage for coating and drying the electrode slurry on a current collector foil for obtaining an electrode tape,
a calendering stage for roll pressing the electrode tape,
a slitting stage for longitudinally cutting the electrode tape to a predefined size and preparing an electrode tab, and
an electrode separation stage for separating the electrode tape into the set of electrodes.

3. The method of claim 2, wherein the electrode is provided with a physical identifier during the coating stage.

4. The method according to any one of the preceding claims, wherein
the electrode is an electrode sheet.

5. The method according to any one of the preceding claims, wherein
providing the electrode with a physical identifier comprises applying the physical identifier on the electrode by a laser device.

6. The method according to any one of the preceding claims, wherein the measurement data of the manufacturing process comprise at least one of:
an electrode basis weight,
an electrode coating thickness,
an electrode density, and/or
an electrode defect.

7. The method according to any one of the preceding claims, wherein
obtaining measurement data at the at least one manufacturing stage comprises:
identifying the electrode by scanning the physical identifier at the at least one manufacturing stage.

8. The method according to the preceding claim, wherein
associating the measurement data to the electrode profile comprises: associating the measurement data to the identified electrode.

9. A method of associating measurement data of a cell manufacturing process with a cell profile of a battery cell, the battery cell comprising a stack or plurality of electrodes, the method comprising:
for each electrode performing the method according to any one of the preceding claims,
associating the cell profile with a physical cell identifier for identifying the cell,
providing the cell with the physical cell identifier,
associating the electrode profiles of the electrodes with the cell profile.

10. The method according to the preceding claim, wherein
for each electrode a peripheral area comprising the physical identifier of the electrode is removed.

11. An electrode for a battery cell, comprising:
a physical identifier configured to be associated with an electrode profile according to any one of the preceding claims.

12. The electrode according to the preceding claim, wherein
the physical identifier is positioned in a peripheral area of the electrode.

13. The electrode according to the preceding claim, wherein
the peripheral area is adjacent to an electrode tab of the electrode.

14. A data storage device for storing at least one of:
measurement data of the manufacturing process associated with a physical identifier according to any one of the preceding method claims,
an electrode profile according to any one of the preceding method claims, and
a cell profile according to any one of the preceding method claims 9 and 10.

15. A system for associating measurement data of a manufacturing process with an electrode profile, wherein the manufacturing process comprises a plurality of manufacturing stages and is configured for manufacturing a set of electrodes, the system comprising:
at least one measurement device configured to obtain measurement data of the electrode at at least one manufacturing stage, and
an identifier device configured to provide the electrode with a physical identifier, and a data storage device according to claim 14.
